# EUROPEAN PATENT APPLICATION

(11) **EP 0 545 065 A2**
(43) Date of publication of application: **09.06.1993**
(21) Application number: 92118306.7
(22) Date of filing: 27.10.1992
(51) Int. Cl.: A23G 3/26, B01J 2/00, A61J 3/00, A01N 47/12

(54) **A tumbler, particularly for coating confectionery products, pharmaceutical products, and the like**

(30) Priority: 31.10.1991 CH 3186/91
(71) Applicant: SOREMARTEC S.A., 6700 Arlon-Schoppach (BE); Ferrero S.p.A., I-12051 Alba (Cuneo) (IT); FERRERO OFFENE HANDELSGESELLSCHAFT m.b.H., D-60599 Frankfurt (DE)
(72) Inventor: Ferrero, Pietro, B-1640 Rhode St. Genèse (BE)
(74) Representative: Bosotti, Luciano

(57) **Abstract**

The outer surface of the tumbler (1) has an opening closed by at least one door (15) which can be moved selectively between a closed position and an open position by a translatory movement substantially parallel to the principal axis (X₁) of rotation of the tumbler. The door or doors (15) in question are moved by an opening device (21) which is located in a fixed position on the frame which supports the drum-like rotary body of the tumbler. The opening device (21) includes one or more slides (23) which have grooves (25) through which external pins (20) on the doors (15) are intended to pass so that the doors (15) can be opened and closed as a result of corresponding movements of the slides (23) towards and away from each other.

The products can thus be discharged even when the tumbler is rotating. For this purpose, the portion of the tumbler which faces downwardly at any particular time is surrounded by an apron-like structure (12) with an outlet at its bottom. The control unit (5) of the tumbler is configured so that, whilst the products are being discharged, it imparts a general swinging motion to the tumbler, with its outlet opening facing downwards.

The preferred application is for processing food and pharmaceutical products, for example, for coating products with layers of chocolate.

## Description

The present invention relates in general to tumblers or tumble-coating machines.

As is known, a tumbler or tumble-coating machine is a machine currently used, particularly in the confectionery and pharmaceutical industries, for producing dragees, pills and the like. It is substantially comparable to a large drum which, after a load of bodies to be coated, for example, moulded bars of liquorice or sugar, has been inserted in its lower portion, is rotated about its principal axis, which is usually kept horizontal or substantially horizontal. During the rotation of the tumbler, a liquid (for example, a sugar syrup) is sprayed into it and gradually deposited on the bodies, so that a coating constituted, for example, by a shell of sugar, possibly supplemented with flavourings etc., is built up around the bodies.

In operation, the tumbler and/or the material treated are heated, usually by supplying a flow of hot air into the tumbler so as to dry the coating layer which is gradually formed around the bodies.

The cycle described above may continue for a fairly long period of time (for example, six hours).

The composition of the liquid which is sprayed into the tumbler may be varied so as to impart different characteristics to the coating formed on the product.

For example, by spraying a less dense syrup towards the end of the process, it is possible to make the coating assume a more even surface appearance (so-called sleeking). Similarly, it is possible, during the final stages of the process, to spray a glazing product (for example, carnauba wax) onto the tumbled products which are almost finished, so as actually to glaze the products.

The sleeking and glazing may be carried out in tumblers other than that in which the major part of the coating is formed.

As stated, tumble-coating techniques can be used in both the food industry and in the pharmaceutical industry, for forming pills or tablets, and even in other sectors. Moreover, it should be noted that the product which forms the tumble-coating may also be constituted by chocolate or equivalent products.

Whatever the particular details of the tumble-coating method carried out, there is generally the problem of discharging the processed products from the tumbler.

According to a conventional solution, discharging is effected manually by personnel who face the interior of the tumbler and remove the processed products, for example, with buckets; in practice, this is the same solution which is used in small tumblers used in small confectionery workshops; naturally, this solution cannot be considered optimal in industrial plants.

In order to resolve this problem, solutions in which the processed products are discharged automatically or semi-automatically from the tumbler have already been proposed.

For example, it has been proposed to provide the outer wall of the tumbler with a door or hatch which can be opened after the tumbler has stopped rotating to enable the products to be discharged.

In other cases it has been proposed that the mixing blades which are normally present in the tumbler be shaped in coordination with the orientation of the axis of rotation of the tumbler so that, when the tumbler is in motion, the blades gradually expel the products therefrom.

In general, however, there remains a set of problems to be solved which, essentially, can be summarised as those of:
- enabling the tumbler to be emptied whilst it is in motion,
- enabling the product to be discharged in a controlled manner at a predetermined moment, for example, upon completion of a certain processing period, which cannot be achieved with certainty, for example, in solutions in which the products are expelled continuously or more or less continuously by the blades, and - in particular
- providing for a careful discharging action which does not damage the products (for example, if the tumbling process is used for coating products with a layer of chocolate).

The object of the invention is essentially to provide a tumbler which can satisfy all the requirements expressed above in an excellent manner.

According to the present invention, this object is achieved by virtue of a tumbler having the specific characteristics recited in Claim 1. Advantageous developments of the invention form the subjects of the subclaims.

The invention will now be described, purely by way of non-limiting example, with reference to the appended drawings, in which:
Figure 1 is a general elevational view of a tumbler formed according to the invention,
Figure 2 is a perspective view of the door or hatch in the periphery of the tumbler of the invention, for discharging the products,
Figure 3 is a perspective rear view of the device for automatically opening the door or hatch,
Figure 4 shows in greater detail the combined operation of some elements illustrated in Figured 2 and 3, and
Figure 5 is a section taken on the line V-V of Figure 4.

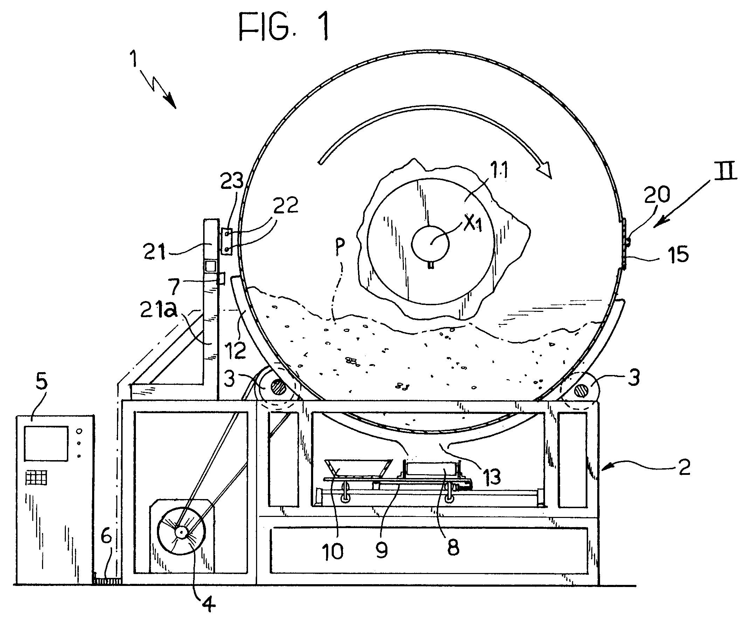

In Figure 1, a tumbler or tumble-coating machine which, for the purposes of the present description and an understanding of the invention, may be considered for the most part wholly known, is generally indicated 1. Essentially, the tumbler 1 resembles a large drum-like body mounted on a support frame 2 with the interposition of rollers 3 which support the peripheral wall of the drum of the tumbler 1 externally and from below so that the body can rotate about its principal axis X₁, whilst being kept in a horizontal position; in practice, the structure is generally comparable to that of a large concrete mixer or a large industrial washing machine.

At least one of the sets of rollers 3 which support the drum-like body of the tumbler 1 is driven by a drive unit (usually constituted by an electric motor) 4, connected to a control unit 5 constituted, for example, by an electronic processor such as, for example, a control system of the type currently known as a PLC.

The processing unit 5, which is connected to the body of the tumbler 1 by a set of cables 6, is also connected to a certain set of sensors (for example, an optical sensor, indicated 7), the function of which is to identify the angular position of the tumbler precisely by detecting the passage of reference formations or marks (not visible in the drawings) on the outer wall of the drum-like body of the tumbler 1.

Below the body of the tumbler 1 is at least one output conveyor 8 (which is shown in the form of a continuous belt conveyor extending below the tumbler and parallel to its principal axis X₁) the function of which is to take away the products once the tumbling cycle is complete.

A load of such products, generally indicated P, is shown in the lower portion of the drum-like body of the tumbler 1.

The conveyor 8 may in turn be mounted on a device 9 which slides in a direction perpendicular to that in which the products advance on the conveyor 8, its function being to move the conveyor 8 sideways relative to the tumbler so as to bring below its principal axis X₁ a channel or gutter 10, the function of which is essentially to take away the water used for washing the tumbler 1 when it is washed after completing an operating cycle.

According to widely known criteria which do not need to be described in detail herein and, moreover, are not relevant for the purposes of an understanding of the invention, the body of the tumbler has at least two end openings (only one of which is visible, indicated 11, in Figure 1). The products P to be processed can be loaded automatically through one of these openings (for example, by means of a bucket loader). The other opening is then used to introduce hot air into the body of the tumbler in order to promote the drying of the fluid which is sprayed onto the products during the tumble-coating process. In particular, this fluid is scattered and sprinkled into the body of the tumbler through nozzles in pipes with horizontal axes which extend axially into the tumbler through one of the end openings 11.

It will also be noted that the lower portion of the body of the tumbler according to the invention is surrounded by a channel-shaped containing wall, generally indicated 12, which forms a kind of semicylindrical outer jacket surrounding the lower portion of the body of the tumbler 1 (at a certain distance so as not to oppose its rotation) so as to form a kind of funnel-like apron which is kept in a fixed position on the frame 2 and, in its lower portion, (in a central position, that is, below the principal axis X₁ of the tumbler), has an opening 13 in correspondence with which the conveyor for collecting the products 8 or, alternatively, the gutter for collecting the washing liquid 10, is positioned.

An important characteristic of the tumbler according to the invention is the presence, in the outer wall or shell 14 of the body of the tumbler, of an opening or hatch (an outlet opening) associated with two doors 15 which extend in symmetrical positions relative to the vertical median plane of the tumbler (which is taken to be perpendicular to the axis X₁ ) and can slide on two tracks 16 which are fixed to the outer surface of the body of the tumbler and extend along two generatrices thereof.

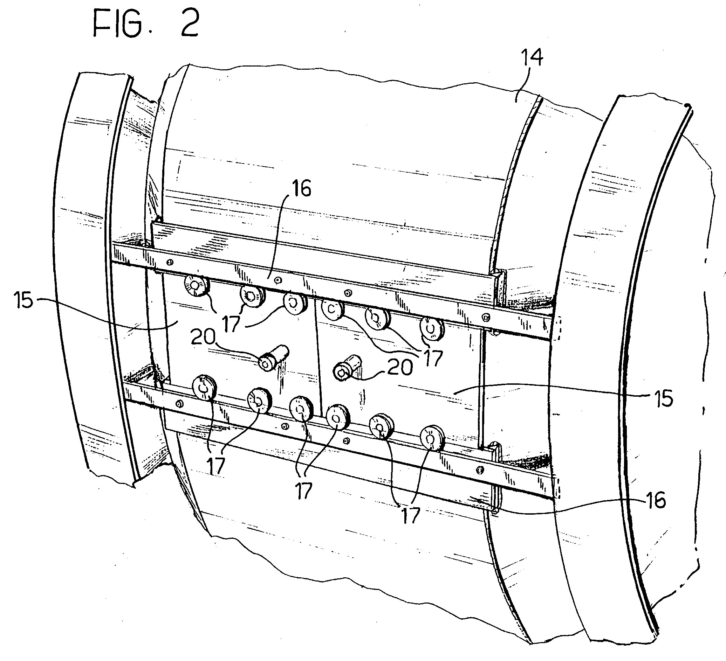

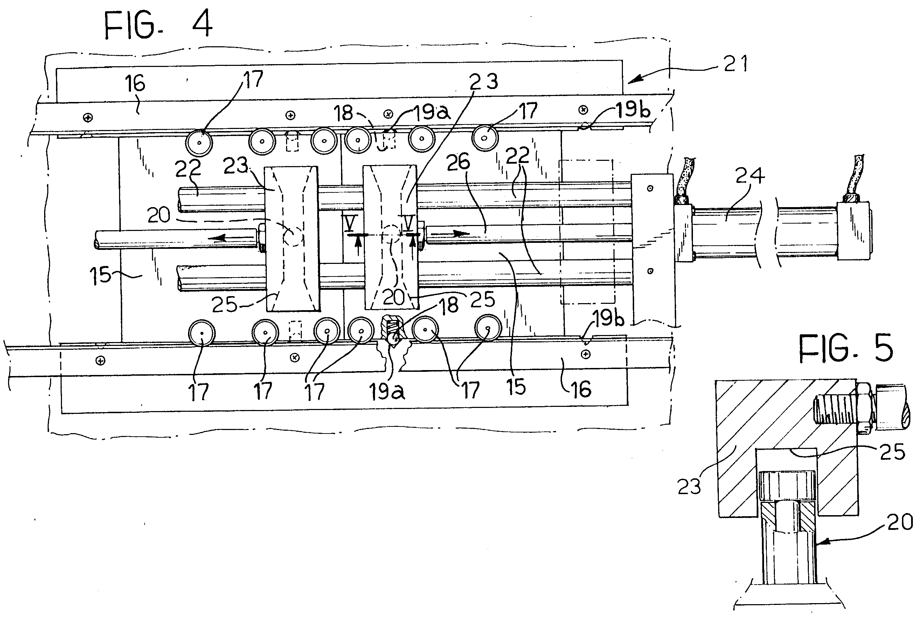

In practice, each of the two doors 15 is constituted by a sheet-metal plate which, in its closed position, is completely coextensive with the wall of the body of the tumbler (and hence does not create discontinuities in the internal surface of the body with which the products P come into contact) but, at the same time, by virtue of the provision of wheels 17, the axles of which are carried by the doors 15 and which roll on the tracks 16, retains the ability to slide between the closed position (shown schematically in continuous outline in Figures 2 and 4) and an open position, which is shown in chain line in Figure 4 only, and in which the door or hatch (the outlet opening) is open.

The shutters or doors 15 of the hatch are usually moved between the closed and open positions completely symmetrically. These positions are determined precisely as a result of the presence, on each of the longer sides of each door 15, (that is, the sides which extend along the generatrices of the body of the tumbler 1) of a ball 18 which is loaded by a spring 18a and can engage two conical recesses 19a, 19b in the central portions of the tracks 16, so as to lock the respective shutter or door 15 in the closed position or in the open position with a certain restraining force, thus preventing it from sliding freely along the tracks 16.

The doors 15 of the hatch are moved by means of two pins 20 which project from the doors 15 (again generally symmetrically) radially of the body of the tumbler 1. The pins 20 are intended to be moved apart or towards each other (causing corresponding movements of the doors 15) by an opening unit (that is, a unit for operating the doors 15), generally indicated 21. This is supported by a bracket-like portion 21a which extends upwardly from the frame 2 of the tumbler to a position half way up the overall height of the tumbler (in this connection, see Figure 1, taking account of the fact that a tumbler according to the invention may easily have a main body with diametral dimensions of the order of 2.5-3 m).

Essentially, the opening unit (or opening device) 21 is composed of two horizontal bars 22 on which two slides 23 can slide, also horizontally, each slide 23 being connected to a pneumatic jack 24 which acts between the frame of the opening unit 21 and the respective slide 23.

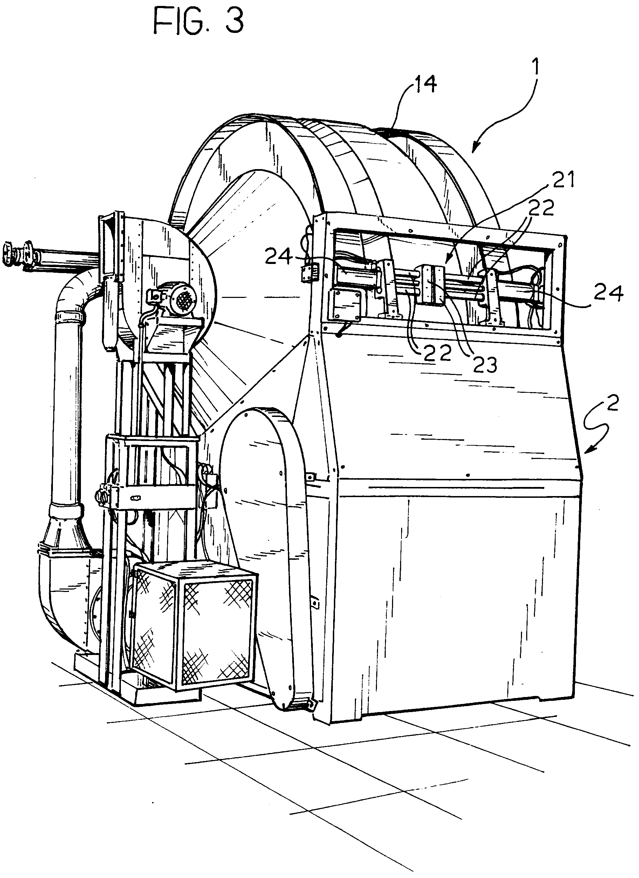

Each slide 23 (see Figure 5), is generally channel-shaped, having a longitudinal (vertical) groove 25 which opens towards the rotary body of the tumbler. More precisely, each slide 23 can move between a closing position, in which it is practically beside the homologous slide (see the continuous lines in Figure 3 and Figure 4) and an opening position, in which each slide 23 has moved away from the homologous slide outwardly of the body of the tumbler (see the broken line in Figure 4).

The longitudinal groove 25 (which extends vertically) of each slide 23 has dimensions slightly larger than those of the pins 20 on the doors of the hatch 15.

In particular, the positions in which the slides 23 and the pins on the doors 15 are mounted are established so that, when the doors 15 are in the closed position, the rotation of the main body of the tumbler 1 causes the pins 20 to follow respective circular orbital paths which pass through the grooves 25 in the slides 23, which are kept in the closing positions. In these conditions, the drum-like body of the tumbler can therefore rotate freely since, when the pins 20 pass the opening device 21, they pass freely through the grooves 25 without interfering therewith.

Similarly, when the doors 15 are open, the pins 20 follow two circular orbital paths and the opening positions of the slides 23 are selected (by adjusting the opening travel of the jacks 24) so that there is no interference between the elements which are in orbital motion (the pins 20) and the fixed elements; therefore this means that, in this situation, when the tumbler 1 rotates, the pins 20 are also sure to pass through the grooves 25 without interference when they pass the opening device 21.

The arrangement is therefore such that the doors 15 of the hatch can be opened or closed simply by moving the slides 23 apart or towards each other when the hatch 15 is passing the opening device 21, that is, when the pins 20 are in the grooves 25. The occurrence of this condition can easily be determined by the control processing unit 5 in dependence on the signal generated by the sensor 7; in fact the sensor can indicate to the unit 5 when the hatch 15 is passing the opening device 21 during each revolution performed by the body of the tumbler about its axis X₁.

Thus it can easily be understood that, in the tumbler according to the invention, the hatch 15 can be opened or closed even whilst the tumbler is rotating.

According to a method of use currently considered particularly advantageous, upon completion of a tumbling cycle (which is indicated, for example, by a timing function of the unit 5) or, in general, each time it is decided to discharge the products P in the tumbler (which may be signalled by an operator by acting on a push-button on the unit 5), the unit 5 slows the movement of the tumbler slightly (the rotation of the drum-like body changing, for example, from its normal speed of 9-10 revolutions/minute to a speed of the order of 2 revolutions/minute).

Having achieved the required reduction in speed, when the hatch 15 passes the opening device (when a signal is emitted by the sensor 7), the control unit 5 sends a control signal to the jacks 24 so as to cause the slides 23 to be moved towards their opening positions, by means of the jacks 24. As they move apart, the slides 23 entrain the pins 20 which are in the grooves 25 at the time in question, so as to open the doors 15.

At this point, as soon as the hatch has rotated through the arc corresponding to the upper portion of the orbital path of the periphery of the drum-like body, it will reach a position in which it faces downwardly in correspondence with the funnel-like apron 12. At this point, the product P in the tumbler will start to be discharged therefrom, falling into the apron 12 to be directed thereby towards the outlet 13 so as to fall onto the underlying conveyor 8.

In general, it can be assumed, particularly with considerable loads of the product P, that the tumbler will not be completely emptied during a single passage past the apron 12. The discharge operation may therefore continue for several revolutions.

According to the currently-preferred method of use, in fact, once the lowest position relative to the apron 12 has been reached (that is, as soon as the hatch 15 has been brought practically into alignment with the outlet opening 13), the unit 5 starts periodically to reverse the sense of rotation of the motor 4 which drives the tumbler so as to impart a general swinging motion thereto. This causes the hatch 15 to move to and fro through a certain angle (for example, more or less 15° either side of the vertical) relative to the outlet. The continuation of this swinging movement for a certain period of time (typically a few seconds) ensures that the tumbler is emptied completely.

At this point, the tumbler can be prepared for a new tumbling cycle whilst the discharged products are transferred by the conveyor 8 towards a further work station (for example, a packaging station, or another tumbler in which the coating process is completed, for example, by sleeking and/or glazing).

In order to prepare the tumbler which has just been emptied for a new operating cycle, it is set in rotation again so as to bring the hatch 15 into correspondence with the opening device 21 (which is kept in the waiting condition with the slides 23 in their opening positions).

At this point, the unit 5 operates the jacks 24 so as to move the slides 23 towards each other. These entrain the doors 15 to the closed position by the mechanism described above, by means of the pins 20 which are housed in the grooves 25.

At this point, a certain quantity of washing liquid, for example, water, can be loaded into the tumbler (usually through one of the openings 11). The motor 4 is then restarted so as to rinse and wash the internal surface of the tumbler.

In order to discharge the washing water and the washing residues, it is possible to proceed in essentially the same way as described above with reference to the discharge of the products, after the device 9 has been moved so that the conveyor 8 is no longer in alignment with the outlet opening in the apron 12, but is replaced by the discharge gutter 10.

In particular, in order to prevent the washing liquid from being discharged too violently when the hatch is opened (and consequently soiling of the region of the plant near the gutter 10), it is possible to provide for an intermediate position in the opening travel of the slides 23 (and hence in the opening travel of the doors 15), corresponding to a smaller opening of the hatch. For example, only one of the doors 15 may be opened slightly by the corresponding slide 23 during the discharge of the washing water (rather than both doors symmetrically) so that a slot, for example, of the order of 10-15 mm is created for discharging the washing water. This can easily be achieved by correspondingly adjusting the opening travel of one of the jacks 24.

It will thus be noted that one of the advantages of the invention lies in the fact that the doors 15 have, so to speak, been separated from their operating means (the devices 21) so that the operating means do not have to be mounted on the rotary body of the tumbler which would increase its weight and make its rotational characteristics asymmetrical.

Naturally, the principle of the invention remaining the same, the details of construction and forms of embodiment may be varied widely with respect to those described and illustrated, without thereby departing from the scope of the present invention.

## Claims

1. A tumbler (1) including a drum-like rotary body which can be rotated about a respective principal axis (X₁) and has an outer shell (14), characterised in that:
the outer shell (14) has an outlet opening associated with at least one door (15) which is movable selectively between a closed position, in which the door (15) closes the outlet opening, making the shell substantially continuous, and an open position, in which the at least one door (15) disengages the opening, leaving it open, and
- operating means (21) which can be activated selectively in order to move the at least one door (15) between its closed position and its open position.

2. A tumbler according to Claim 1, characterised in that two doors (15) are associated with the opening and can move so that they open and close substantially symmetrically.

3. A tumbler according to Claim 1 or Claim 2, characterised in that the at least one door (15) moves between its open position and its closed position along a line substantially parallel to the principal axis (X₁).

4. A tumbler according to any one of Claims 1 to 3, characterised in that the opening is associated with at least one track (16) along which the at least one door (15) can slide.

5. A tumbler according to Claim 4, characterised in that rotary bodies (17), preferably in the form of wheels, are interposed between the track (16) and the at least one door (15).

6. A tumbler according to any one of Claims 1 to 5, characterised in that the operating means (21) are in a generally fixed position relative to the rotary body, so that the at least one door (15) is engaged by the operating means (21) only when the at least one door (15) passes the operating means (21) during the rotation of the rotary body.

7. A tumbler according to Claim 6, characterised in that the at least one door (15) has a pin (20) which projects outwardly of the rotary body and the opening device (21) has at least one slide (23) which has a groove (25) which can extend along a path such that it does not substantially interfere with the paths followed by the pin (20) during the rotation of the rotary body, the arrangement being such that the movement of the slide (23) along a line substantially parallel to the axis of rotation (X₁) of the rotary body with the pin (20) in the groove (25) causes the at least one door (15) to move as a result of the entrainment of the pin (20) by the walls of the groove (25).

8. A tumbler according to Claim 7, characterised in that at least one operating device (26) is associated with the slide (23) for moving it selectively.

9. A tumbler according to Claim 7 or Claim 8, characterised in that it includes two doors (15) and two slides (23) which are movable generally symmetrically in order to open and close the doors (15).

10. A tumbler according to Claim 8 and Claim 9, characterised in that the slides (23) are associated with respective operating devices (24), the arrangement being such that at least one of the slides (23) can be moved independently of the other (23) so as to cause a partial opening movement of only one of the doors (15).

11. A tumbler according to Claim 1 or Claim 7, characterised in that it includes sensor means (7) which are sensitive to the angular position reached by the rotary body as it rotates about its main axis (X₁), as well as control means (5) which are connected to the sensor (7) and to the operating means (21) so as to cause the operating means (21) to intervene and thus move the at least one door (15) when the rotary body is in a predetermined angular position during its rotation.

12. A tumbler according to any one of the preceding claims, characterised in that it includes means (2) for supporting the rotary body so that it can rotate about its principal axis (X₁) which is kept substantially horizontal in use, and in that the portion of the rotary body which is in the lower position at any particular time is surrounded by an apron-like structure (12) with a further, lower outlet (13), the arrangement being such that the products (P) discharged from the rotary body through the outlet opening with the at least one door (15) in the open position collect in the apron structure (12) and finally reach the further outlet (13) by gravity.

13. A tumbler according to Claim 12, characterised in that it includes a conveyor structure (8) located below the further outlet (13) for taking away the products P which fall from the outlet.

14. A tumbler according to Claim 13, characterised in that the conveyor structure (8) is movable selectively and has an associated gutter structure (10) which can also be located in vertical alignment with the further outlet (13) so as to transport washing liquid which is discharged into the apron-like structure (12) from the rotary body.

15. A tumbler according to any one of the preceding claims, characterised in that it includes a control device (5) which can move the outlet opening generally downwardly with the at least one door (15) in the open position when the products (P) in the rotary body are to be discharged and can then cause the rotary body (1) to swing about the position in which the discharge opening faces downwardly, so as to discharge the product (P) in the tumbler completely.
